(19) **Europäisches Patentamt**

**European Patent Office**

**Office européen des brevets**

(11) **EP 1 518 305 B1**

(12) **EUROPEAN PATENT SPECIFICATION**

(45) Date of publication and mention
of the grant of the patent:
**15.03.2006 Bulletin 2006/11**

(51) Int Cl.:
*H01S 5/18* (2006.01)          *G02B 6/42* (2006.01)

(21) Application number: **03737790.0**

(22) Date of filing: **23.06.2003**

(86) International application number:
**PCT/CA2003/000944**

(87) International publication number:
**WO 2004/004083 (08.01.2004 Gazette 2004/02)**

(54) **A BACK REFLECTION INSENSITIVE ELECTRO-OPTICAL INTERFACE AND A METHOD OF COUPLING THE SAME TO A WAVEGUIDE**

EIN GEGEN RÜCKSTREUUNG UNEMPFINDLICHER ELEKTROOPTISCHER KOPPLER UND METHODE ZU DESSEN ANKOPPLUNG AN EINEN WELLENLEITER

INTERFACE ELECTRO-OPTIQUE INSENSIBLE AU SIGNAL DE FOND ET PROCEDE DE COUPLAGE DE CETTE INTERFACE A UN GUIDE D'ONDES

(84) Designated Contracting States:
**AT BE BG CH CY CZ DE DK EE ES FI FR GB GR HU IE IT LI LU MC NL PT RO SE SI SK TR**

(30) Priority: **28.06.2002 CA 2392119**
**11.10.2002 US 269892**

(43) Date of publication of application:
**30.03.2005 Bulletin 2005/13**

(73) Proprietor: **Photonami Inc.**
**Richmond Hill,**
**Ontario L4B 1E4 (CA)**

(72) Inventors:
• **HASLETT, Tom**
**Toronto, Ontario M4L 2S5 (CA)**
• **LI, Wei**
**North York, Ontario M3A 1V4 (CA)**
• **SADEGHI, Seyed, Mostafa**
**Toronto, Ontario M4P 2K8 (CA)**

• **SHAMS-ZADEH-AMIRI, Ali, M.**
**North York, Ontario M3A 1V4 (CA)**

(74) Representative: **Frankland, Nigel Howard**
**FORRESTER & BOEHMERT**
**Pettenkoferstrasse 20-22**
**80336 München (DE)**

(56) References cited:
**US-A- 5 760 946          US-A- 6 081 636**

• **CARLSON N W ET AL: "MODE DISCRIMINATION IN DISTRIBUTED FEEDBACK GRATING SURFACE EMITTING LASERS CONTAINING A BURIED SECOND-ORDER GRATING" IEEE JOURNAL OF QUANTUM ELECTRONICS, IEEE INC. NEW YORK, US, vol. 27, no. 6, 1 June 1991 (1991-06-01), pages 1746-1752, XP000229991 ISSN: 0018-9197**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

## FIELD OF THE INVENTION

This invention relates generally to the field of telecommunications and more particularly to optical signal-based telecommunications. Most particularly this invention relates to electro-optical assemblies for connecting semiconductor laser optical signal sources to optical signal transmitting waveguides such as optical fibres and the like.

## BACKGROUND OF THE INVENTION

There are a variety of optical signal sources used for creating carrier signals for optical signal-based telecommunication systems. One type of signal source is a semiconductor laser that has certain advantages in being easy to manufacture in large quantities at a reasonable cost. There are many different types of such semiconductor laser signal sources including edge emitting semiconductor lasers, vertical cavity surface emitting lasers and more recently horizontal cavity surface emitting lasers.

Low-cost signal sources are urgently required to extend the optical-based networks from the present long haul backbone ring portions to local nodes closer to the end user, the latter being the so-called 'metro' portion of the network. While large and expensive signal sources are justifiable in the long haul backbone portions, the same cannot be said for all of the internal network nodes in a metro area. Infilling the network, bringing the optical signals closer and closer to the end user, is conditional upon being able to provide low cost high quality signal sources in large volumes to provide the vast number of required carrier signal sources for the metro portion of the network. To date there have been efforts to provide such signal sources, but the prior art signal sources suffer from numerous disadvantages and thus have not been deployed in a widespread fashion.

No matter what form the optical signal emitter takes there is a need to couple the signal light output to an optical waveguide, such as an optical fibre. Much effort has been devoted to designing the signal source or emitter to yield an output signal of sufficient power and signal quality that it can be efficiently and effectively coupled to the fibre or the like. Thus, the art teaches various designs of semiconductor which are claimed to produce a Gaussian shaped far field signal which can be easily and efficiently coupled to a fibre.

An electro-optical interface can be considered to be a point in a telecommunications network where the electrical signals are converted into optical signals in one direction and optical signals are converted to electrical signals in the other direction. A major concern in developing an appropriate signal source for the metro network portion of an optical network is the cost of the signal source. This is because there is a need for a separate signal source for each optical channel of the telecommunications band and separate signal sources at each electro-optical interface in the network. A low cost design is therefore required if the general deployment of such optical signal sources is to occur. The cost of the signal source can be divided into two main components. The first is the actual capital cost of the optical signal source. The second is the packaging cost of packaging the signal source together with whatever other components may be required to couple the signal source to a waveguide such as a fibre or the like.

Optical feedback is a known phenomenon, which can have a dramatic effect on the performance of laser signal sources. This property can be used to improve the optical signal output, through a so-called external cavity configuration. For example, if the longitudinal mode selection of the laser is made by other means, such as a grating reflector, the external feedback may be used for tuning the laser emission frequency or for a considerable line width narrowing. An external cavity having controlled external reflection or feedback may also be useful for reducing the signal chirp. Thus, prior art designs have made use of controlled feedback to improve signal characteristics in some cases. Usually such feedback, while leading to lower chirp and narrower lines, will also result in a lower bandwidth making the laser more difficult to modulate at high rates.

While controlled optical feedback may be useful as noted above, uncontrolled optical feedback can have the opposite effect. Uncontrolled optical feedback, also referred to as back reflection, can arise from any interface or scattering center in an optical network. Common sources of detrimental feedback include simple interfaces or partially reflective surfaces associated with a fibre pigtail connection in an optical network. Back reflection can travel along an optical path or waveguide and need not originate in the immediate environs of the signal source. When back reflected signal light couples back into the laser cavity, changes in the resonance condition arise causing often significant changes to the laser output. A back reflection into a laser cavity can also be considered as setting up a second cavity having many more modes than the original. Detrimental effects to signal quality include instabilities in the output signal power, mode hopping, wavelength shifts, increased noise and increased spectral line width of up to several tens of Gigahertz. These instabilities are also referred to as "coherence collapse" and arise when the back reflection enters into the laser cavity and detrimentally affects the lasing phenomenon.

To avoid the uncontrolled effects of back reflection, an optical isolator is required in all but the least demanding of applications. An optical isolator is defined as an element that allows light to pass in one direction only and is typically deployed to allow the outgoing signal light to pass while preventing back reflections from passing and entering into the cavity thus disturbing the laser stability. Isolators are normally placed between the signal source and the optical fiber or waveguide. Typically a lens is placed prior to the isolator to collimate the light output from the optical signal source through the isolator and a second lens is used to couple the light into the optical fiber or waveguide. The isolator must be placed and configured in a way to prevent detrimental back reflections from entering into the laser cavity, since such back reflections can cause the unwanted changes to the cavity characteristics and the loss of signal quality noted above.

The need for an optical isolator as explained has several undesirable consequences. Firstly, the further the signal source is away from the end of the fibre with which it is to be optically coupled, the more difficult and precise the alignments of the intervening components need to be. The more difficult the alignment, the more difficult the packaging becomes, thus lowering the manufacturing yields and increasing the packaging expense. The complexity of alignment increases nonlinearly with the number of elements required as the alignment errors in each element are cumulative for the overall alignment. Lastly of course there is the actual cost of the additional components, such as the isolator and any required lensing that is in many cases even more costly than the signal source.

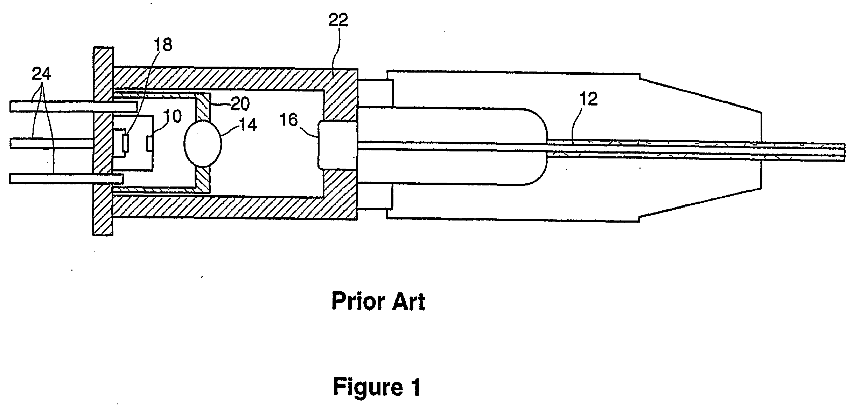

Figure 1 shows a typical Coarse Wavelength Division Multiplexed (CWDM) optical signal source 10, in the form of a laser semiconductor chip coupled to a fiber waveguide 12 according to the prior art. The laser chip 10 is of the edge emitting type and is mounted behind a lens 14, followed by an isolator 16. A back facet detector 18 is also shown, for monitoring the power of the output signal (since the signal is emitted from both edges of the chip). It will be seen that the fibre 12 is mounted to receive the focussed and isolated output or carrier signal from the chip 10. It will also be noted that stands 20 and 22 need to be positioned relative to chip 10 to couple the signal to the fibre 12. Electrical connectors 24 are also shown.

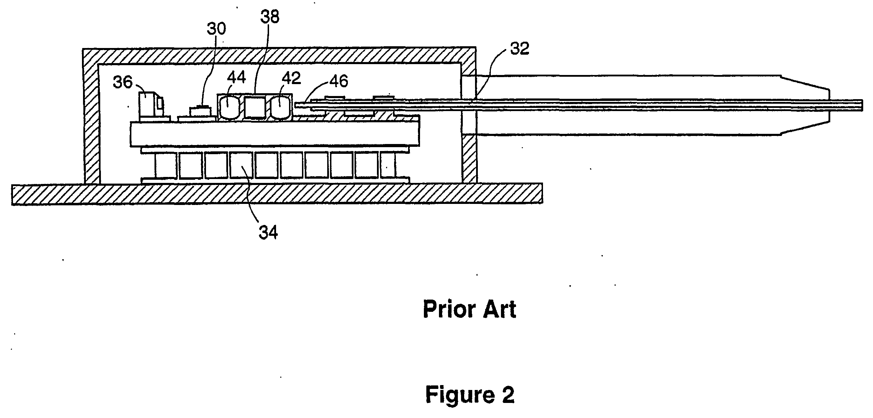

Figure 2 shows a typical Dense Wavelength Division Multiplexed (DWDM) edge emitting signal source 30 coupled to a fibre waveguide 32 also according to the prior art. The general configuration is similar to that shown in Figure 1, with additional components to ensure very stable signal output wavelengths. Thus, a thermoelectric cooler (TEC) 34 is provided for accurately controlling the temperature of the signal source. A back facet detector 36 is provided as well as a lens and isolator assembly 38. In this case two ball lenses 42, 44 are used to couple the output signal into the fibre 46. As can be appreciated the arrangement of these components which are already very small and which are likely to become even smaller in the future, represents a significant packaging challenge and expense.

US-A-6 081 636 disloses a grating coupled surface emitting laser for coupling the surface emission to a waveguide.

What is needed is an optical semiconductor signal source packaging configuration which on the one hand reduces alignment concerns and hence packaging costs, and yet on the other hand produces a stable output suitable for use as a signal carrier wave in optical networks.

## SUMMARY OF THE INVENTION

According to this invention there is provided an electro-optical interface, said interface comprising a package base connected to a source of electrical signals; a semiconductor telecommunication optical signal source mounted on said base and having a cavity and a second or higher order grating formed within the cavity, said telecommunication optical signal source being operatively connected to said package base to convert said electrical signals into surface emission optical signals when said signal source is energised, and a waveguide operatively positioned adjacent to said telecommunication optical signal source to couple said surface emissions to said waveguide, said cavity being sized, shaped and positioned so that a radiation field for said cavity is not a mode discrimination mechanism such that any back reflection received in the cavity affects a coupling coefficient to the radiation field without affecting fundamental modes of oscillation of said cavity.

Preferably said telecommunication optical signal source is a gain coupled signal source.

Conveniently said cavity includes said grating in an active layer.

Alternatively said telecommunication optical signal source is a loss coupled optical signal source.

Preferably said cavity includes said grating in a current blocking layer.

In one embodiment said cavity includes an index coupled grating having a phase shift sufficient to isolate back reflection from said cavity oscillations.

In a further embodiment said cavity is sized and shaped to guide two counter waves to oscillate in a direction other than along an axis of coupling to said waveguide.

Conveniently said cavity is sized and shaped to guide two counter running waves to oscillate in a direction generally at right angles to the axis of coupling to the waveguide.

Advantageously said isolation makes the surface emission optical signals insensitive to the back reflection.

Conveniently said insensitivity is achieved without an optical isolator.

Preferably the interface further includes one or more lenses located between said signal source and said waveguide to facilitate optical coupling therebetween.

The present invention as defined in claim 1 is directed to a novel packaging arrangement for coupling semiconductor signal sources to optical waveguides such as optical fibre. The present invention comprehends in one aspect a packaging arrangement that reduces alignment issues, by essentially reducing the number of optical components required between the signal source and the optical waveguide or fiber carrying the signal. In this manner the present invention provides a more cost effective packaging arrangement for a signal source incorporated into an electro-optical interface.

The reduction in the number of components required in such a coupling arrangement reduces the packaging cost, both because fewer components are required (lower capital cost) and because fewer steps are required (lower labour cost) to package the components together to achieve adequate alignment and coupling efficiencies. Such an improved ease of manufacture has a significant impact on the costs of manufacturing packaged signal sources intended for such electro-optical interfaces.

The present invention further comprehends accomplishing the foregoing while still maintaining signal quality characteristics including avoiding coherence collapse, mode hopping, and the like. In particular, the present invention is directed to a low cost, efficient, and effective solution to overcoming detrimental effects of back reflection to a signal source cavity without the use of a costly isolator. The present invention comprehends providing a stable output from the signal source which is both predictable and of high quality to meet the network demands for quality signal sources, while at the same time providing the reduced cost manufacturing process as noted above. The present invention comprehends using lenses if appropriate or desirable to help couple signal output to a waveguide.

Therefore, according to one aspect, the present invention provides an electro-optical interface as defined in claim 1.

## BRIEF DESCRIPTION OF THE DRAWINGS

Reference will now be made to various figures, by way of example only, which depict preferred embodiments of the invention and in which:

Figure 1 is a typical prior art connection for a CWDM electro-optical coupling;
Figure 2 is a typical prior art connection for a DWDM electro-optical coupling;
Figure 3 is side view of a surface-emitting laser signal source with back reflection;
Figure 4 is a side view of a second order DFB laser signal source according to the present invention;
Figure 5 is a diagrammatic representation of the basic mechanism of interaction of the laser of Figure 4;
Figure 6 is a model of a second order resonant grating according to the present invention;
Figure 7 is a representation of a second order DFB laser signal source with absorbing boundary conditions in the vertical direction.
Figure 8 is the representation of Figure 7 with reflectors in the vertical direction
Figure 9 is a model for obtaining the Green's function of the second order laser signal source of Figure 8;
Figure 10 is an example of an electro-optical connection according to one embodiment of the present invention; and
Figure 11 is an example of an electro-optical connection according to a second embodiment of the present invention.

## DETAILED DESCRIPTION OF THE PREFERRED EMBODIMENTS

In this description the following terms have the following meanings: waveguide coupling axis means the axis along which the signals propagate to couple to a waveguide. This is also referred to in this specification as a vertical axis. The oscillation axis is the axis along which laser oscillations take place within the cavity and is also referred to herein as a horizontal axis. It will be understood however that the terms horizontal and vertical are intended to be relative terms only and that the present invention comprehends that the actual orientation of the device in space does not matter nor will its position affect the performance of the present invention in accordance with the teachings of this specification. Waveguide means any structure used to guide an output carrier signal, such as a fibre or other chip based waveguide structure. The term laser cavity means a structure in which lasing oscillations arise. The term connection space means a space in which a waveguide may be positioned to couple to emissions from the signal emitter. The term operatively connected means connected in a functional way to permit the components so connected to function as desired. The term gain in this description means the value of the optical signal power gain or loss at a particular location.

The preferred signal source according to the present invention is a semiconductor laser, which may readily be formed as a monolithic structure. A typical construction for such a laser provides a semiconductor structure having a substrate, an active layer, cladding layers surrounding the active layer, outer faces and electrodes by which voltage can be applied across the semiconductor structure. Also provided is an opening or window on one surface to permit the signal to be emitted and a second or higher order grating within the laser cavity. The grating is formed from elements of alternating characteristics (gain or index) having a predetermined period. The present invention contemplates the use of grating elements of alternating gain, the so called gain coupled or loss coupled gratings which include gratings of alternating index (the so called complex coupled gratings) as well as purely index coupled gratings. As detailed below, index coupled grating lasers which have radiation fields which are a mode discrimination mechanism are not comprehended by the present invention. Laser structures in which the radiation field is not a mode discrimination mechanism are comprehended, so for example, an index coupled grating with a quarter-phase shift is comprehended by the present invention. Other strategies are also comprehended, such as a careful attention to the duty cycle of a complex coupled grating, but may have other disadvantages, such as requiring high material gains to be sufficiently stable.

The preferred semiconductor laser of the present invention is a high power surface emitting semiconductor laser with a single lobe far field radiation pattern which is suitable to be coupled to a waveguide. Most preferably the high power is achieved with reasonable efficiency and the signal quality is such that it can be used in telecommunications systems. Where a phase shift structure is used it most preferably will also help to render the far field pattern more Gaussian in shape. Other methods as are known in the art for improving the mode pattern are also comprehended by the present invention.

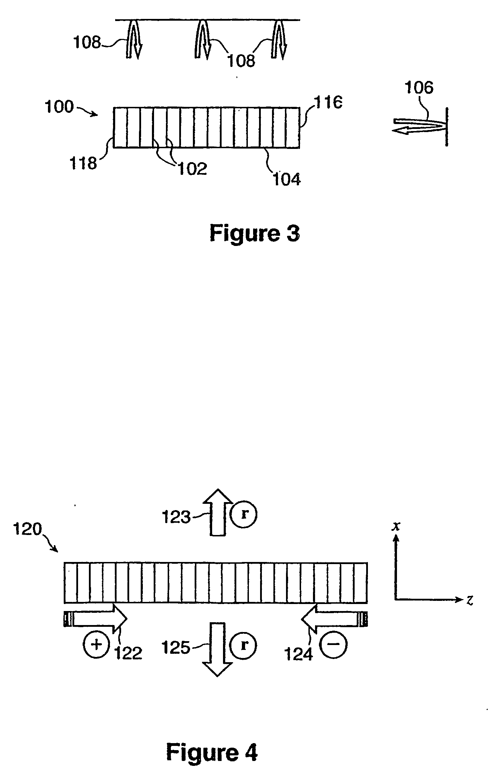

An optical signal source according to the present invention is depicted generally at 100 in Figure 3. The preferred optical signal source is a semiconductor laser as explained above producing surface emissions generally normal to the surface or outer face of the laser. The optical signal source 100 includes a grating 102 associated with a laser cavity 104. As can be seen the oscillation conditions of the surface emitting DFB laser 100 are obtained by the boundary conditions of the horizontal cavity and there are no oscillations in the vertical direction with signal back reflection shown as 108. The presence of a second or higher order gating promotes the expression of the output signal as a surface emission. With a horizontal cavity as shown, the effect of feedback 106 from the side edges 116, 118 is the same as in the prior art. The effect can be considered by modelling the laser as having an external cavity in addition to the intended cavity and thus feedback in the horizontal direction from the edges 116, 118 will have detrimental effects, as it will tend to disrupt the intended lasing oscillations required for accurate carrier signal production.

The present invention comprehends coupling the surface emissions from the laser to a waveguide. Thus, it will be understood that the laser 100 does not have any oscillation in the vertical or waveguide coupling direction. The effect of feedback or back reflections 108 along the waveguide coupling axis back into the cavity will not have the same effect as in the edge emitting case, where the back reflections enter into the cavity along same axis as the oscillation in the laser cavity 104. Figure 4 shows a second order DFB surface emitting laser 120. As shown this cavity will exhibit two coherent counter-running guided waves 122 and 124 in the +z and -z directions. These waves 122, 124 will be highly confined within the laser cavity by means of the cladding layers in a known manner, and will interact with each other through second order diffraction. Due to the interaction of the counter running guided waves 122 and 124 and the grating, a surface emission radiation field r is generated from top 123 and bottom 125 of the laser 100 as shown.

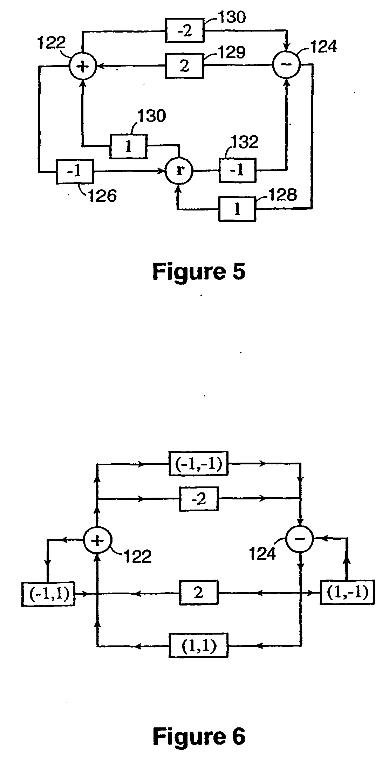

Figure 5 illustrates the basic interaction mechanism of the second order grating and the oscillations in the laser cavity as previously described. As shown, the positively and negatively travelling guided waves 122, 124 interact with the grating via first order diffraction at 126, 128, which in turn generates a radiation field r. The radiation field r in turn interacts at 130, 132, through first order diffraction with both the positively and negatively travelling guided waves. Finally, through second order diffraction, the positively and negatively travelling guided waves are directly coupled with each other 129, 130. At resonance, all of these interactions are self-consistent and stable.

As previously stated, there is no oscillation along the vertical or waveguide-coupling axis of the present invention. The second order grating introduces an additional coupling mechanism between the guided waves through the radiation-coupling coefficients. In Figure 6, the positive and negative waves 122, 124 are directly coupled through the coupling coefficients shown as 2, and -2. All the indirect coupling of the positive and negative waves are shown through the radiative coupling coefficients labelled (1,1), (-1, -1), (-1, 1) and (1,-1). Note that in these labels the 1 and 2 designation refers to first and second order diffraction respectively and the radiative coupling coeffiecients consist of a pair of first order diffractions since the coupling is achieved by first order from travelling wave to radiative field in conjunction with a first order coupling of the radiative field to a travelling wave. Thus, Fig. 6 models the second order resonant grating with back reflection.

As can now be understood from the foregoing models, the coupling coefficients due to the radiation fields are obtained by applying the boundary conditions in the vertical, waveguide coupling direction and not in the direction of the oscillations within the cavity. Therefore any back reflection into the cavity affects the only the radiation coupling coefficients. This is explained in more detail below.

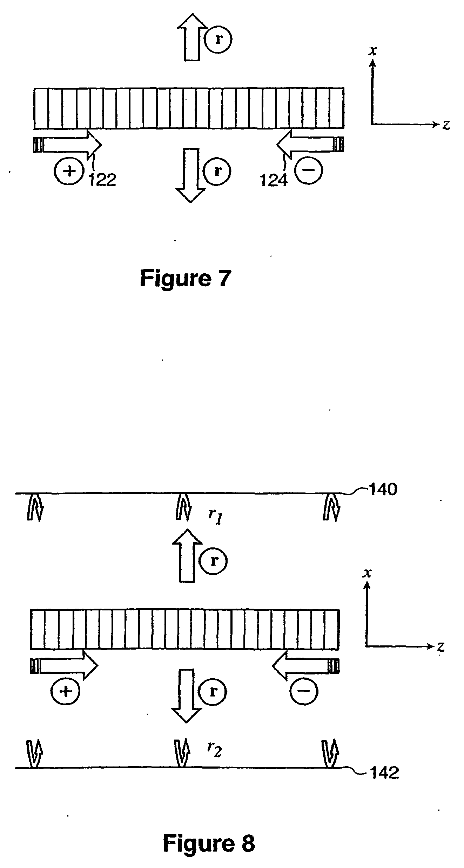

Second-order DFB lasers with reflectors on both sides of the cavity in the vertical direction can be considered, to determine the effect of back reflections into the cavity on signal output quality. To this end, first it is insightful to consider a 2-D model of a second-order DFB laser with absorbing boundary conditions in the vertical direction as shown in Fig. 7. In this structure a highly confined $+z$ travelling wave 122 defined by the function $A(z)e^{(-j(2\Pi/\Lambda)z)}F(x)$ interacts with the grating of period $\Lambda$ via second-order diffraction and generates the coherent $-z$ travelling wave 124 $B(z)e^{(j(2\Pi/\Lambda z)}F(x)$ which is also confined in the $x$ direction. $F(x)$ is the transverse profile of the guided modes in the $x$ direction. By symmetry, the $-z$ travelling wave also interacts with the grating and reacts on the $+z$ travelling wave. This mutual interaction between the guided modes is described by the coupling coefficient $k$. In addition to the guided waves, a radiation field $r$ is also generated as a result of the interaction of the guided waves with the grating via first-order diffraction. Treating the guided waves as the source of the radiation field, the radiation field can be obtained from guided waves by seeking the Green's function, which satisfies the following equation [1]:

$$\frac{\partial^2 G(x,x')}{\partial x^2} + n^2(x)k_0^2 G(x,x') = \delta(x - x')$$

$$(1)$$

where $n(x)$ is the refractive index profile of the unperturbed geometry of the waveguide in the absence of the grating or any gain or loss and $k_O$ is the wave number at the lasing wavelength. The boundary conditions along the x direction are the key for obtaining the Green's function. For example, for the structure shown in Fig. 7, the Green's function is the solution of the homogeneous differential equation

$$(2)$$

$$\frac{\partial^2 G(x,x')}{\partial x^2} + n^2(x)k_0^2 G(x,x') = 0 \quad .$$

Since there is no boundary condition in the x direction, the solution of (2) has a travelling wave character in the $+x$ and $-x$ directions and only the boundary conditions at $x = x'$ is applied. The radiation field in turn interacts with the grating and reacts on the guided waves. Since the radiation field is originally generated by the guided modes, this reaction can be described by an additional coupling coefficient between these two guided modes which is denoted by $k^r$. In resonant second-order gratings $k$ and $k^r$ are the key parameters describing the longitudinal mode of the DFB laser. More precisely, the longitudinal mode of the DFB laser is governed by the following coupled-differential equations:

$$(3)$$

$$\frac{dA}{dz} = (a - j\delta + k')A - j(k + jk')B$$

$$(4)$$

$$\frac{dB}{dz} = j(k + jk')A - (a - j\delta + k')B$$

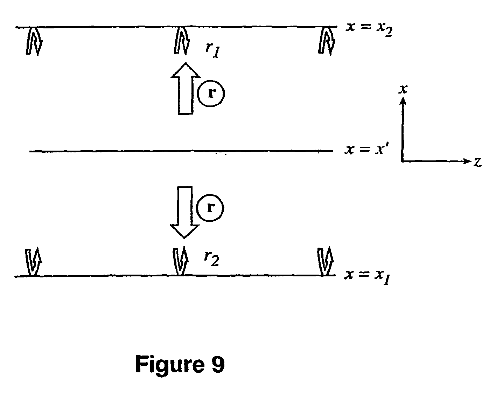

In dealing with DFB lasers with second-order grating it should be noted that the presence of a reflector in the vertical direction only affects the coupling coefficient due to the radiation field. More specifically, for a second-order DFB laser illustrated in Fig. 8 with reflectors 140, 142 at both sides in the vertical direction, the Green's function is a solution of homogeneous differential equation (2) with the boundary conditions illustrated in Fig. 9. In fact, unlike the case shown in Fig. 7, the solution in $x_1 < x < x_2$ is of standing wave type and is travelling for $x < x_1$ and $x > x_2$. Needless to say, the new boundary conditions change the coupling coefficient due to the radiation field and hence one of the parameters in the longitudinal model. For a second-order DFB laser with an index grating without any phase shift the coupling coefficient to the radiation field is the key parameter responsible for mode selectivity, making such a structure sensitive to back reflection and requiring an isolator.

Therefore, any reflection may affect the laser mode or the side-mode suppression ratio. For example, if two perfect mirrors are placed at $x = x_1$ and $x = x_2$ all of the radiation field will be fed back into the cavity and there would be no radiation loss responsible for the mode selection. Therefore, the laser behaves as an index-coupled one and mode hopping will happen. Note that this phenomenon happens despite the fact that the coupling to the radiation field is weak. On the other hand, for a phase shifted second-order laser, radiation field is not a mode discrimination mechanism. Even if all of the radiation field is fed back into the cavity the laser behaves as a purely index-coupled one with phase shift and it will lase at the Bragg wavelength without any mode hopping.

As can now be appreciated by the foregoing description, the surprising result is that by controlling the size, shape and configuration of the cavity, a laser signal source which is highly insensitive to back reflection can be provided. The insensitivity arises where the back reflections only affect the coupling coefficient due to the radiation field, rather than any of the fundamental modes of oscillation of the laser. Thus, provided the laser cavity is one in which the radiation field is not a mode discrimination mechanism, the insensitivity will be obtained. In this sense the laser cavity configuration isolates the back reflection from the cavity oscillations making the signal emitter performance substantially insensitive to back reflection without the need for any specific isolator structure interposed on the signal path between the signal source and the associated waveguide.

The present invention comprehends all forms of semiconductor laser which manifest such back reflection insensitivity, including gain and loss coupled grating structures, as well as those incorporating phase shifting or the like. Further, although not determinative of the insensitivity, the present invention does comprehend that the oscillation axis of the highly confined and guided waves in the cavity be different from, and most preferably orthogonal to, the waveguide coupling axis. In this sense insensitivity means that the signal quality (particularly including the wavelength, power and sidemode suppression ratio) is to a high degree not affected by the presence or absence of random back reflections into the cavity. In this sense the term insensitive is relative, and a very high (i.e. more than about 50%) back reflection will in some cases still cause noticeable change in some signal quality parameters but the laser will remain within operating parameters.

As can now be further appreciated, the present invention comprehends an electro-optical interface in which an optical emitter can be directly coupled to a fibre waveguide by operatively positioning the waveguide adjacent to the signal emitter to permit the signals emitted to couple to the waveguide. With an appropriately sized, shaped and configured cavity, the coupling to the waveguide can be accomplished without any intervening isolator and further without any unacceptable loss of signal quality due to back reflection. Thus, the present invention is directed to an isolator-free electro-optical connection. Without the need for an isolator both capital and labour costs are reduced, making the present invention more available to the market.

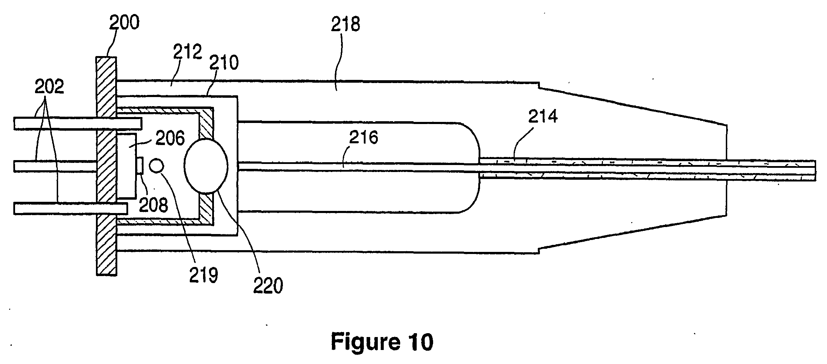

Figure 10 shows a CWDM electro-optical assembly according to the present invention. There is a co-ax base 200 with electrical connectors 202. Then there is a substrate 206 onto which the laser chip 208 is operatively connected. A connection cavity 210 is formed by boot wall 212. A fibre assembly 214 surrounds a fibre 216 and is sized and shaped to fit into the connection cavity 210. A boot 218 completes the mechanical connection of the fibre assembly to the fibre itself. An optional rod lens 219 and a ball lens 220 are shown and help to couple the signal output to the fibre 216.

As will be appreciated from the foregoing description the present invention provides for much less expensive packaging of the signal source than was possible in the prior art. Quite simply, the need for an isolator 16 has been eliminated, with the surface emissions being fed directly into the fibre in the preferred embodiment. The present invention comprehends the use of a lens 220 or lenses, if desired, to assist in coupling the signal to the fibre, depending upon the form of the signal output, and its suitability to be easily coupled to the fibre. In this way the present invention comprehends a simple plug and play field connection for an electro-optical interface, where the fibre can be more closely positioned to the signal source, and thus signals more easily and reliably coupled thereto as compared to the prior art.

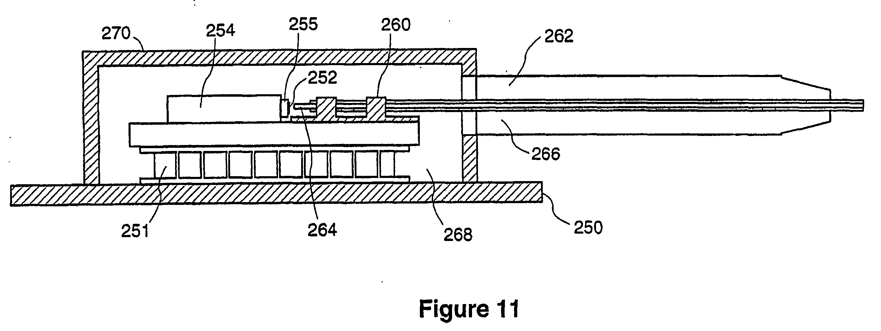

Figure 11 shows a DWDM connection according to the present invention. In this embodiment the package base 250 may for example be a 14-pin butterfly style base. The present invention also comprehends other types of package base and the 14 pin butterfly is provided by way of example only. Essentially the base 250 functions to operationally connect the electrical signals to the electro-optical interface in such a way as to permit the electrical signals to be converted into optical signals through the semiconductor laser chip 252.

Connected to the package base 250 is a TEC (thermoelectric cooler) 251 which can absorb and thus dispose of extra heat energy, which might otherwise affect the output signal wavelength or signal quality. A heat sink 254 is mounted to the TEC 251 and a substrate 255 is mounted between a laser chip 252 and the heat sink 254. The chip 252 is shown as a surface emitter of the type previously described. The substrate operatively connects the laser chip with the incoming electrical signals, in a known manner, which will be understood by those skilled in the art. Adjacent to the laser chip 256 is a fibre clip 260 of the type that can hold a fibre in place with a metalised fibre assembly 262. A fibre 264 is shown extending through a boot 266 into a connection cavity 268. A removable lid 270 is provided to close the connection cavity 268.

As with the embodiment of Figure 10, this embodiment requires no intervening elements between the signal emitter or chip 256 and the end of the fibre 264. All that is required is that the fibre be adjacent to the chip, permitting the surface emissions to be coupled to the fibre. This is referred to as operatively positioning the fibre adjacent to the signal emitter. Again, the present invention comprehends also the use of a lens or lens if desired, which may increase the manufacturing yields with the addition of a nominal cost.

As can now be appreciated, the present invention may be applied in a method of coupling an optical signal source to a waveguide that includes a number of separate steps. The first step is to provide a semiconductor laser source having a second or higher order grating and a cavity, the cavity being sized, shaped and positioned to produce signals within the telecommunications band. The grating, in turn, is such as to induce surface emissions. The grating is also designed such that the radiation field is not a mode-selection mechanism. The next step is to operatively position the semiconductor laser adjacent to a waveguide. Then the last step is to couple the surface emissions of the laser to the waveguide without any intervening isolator.

While the foregoing description has been made with respect to various preferred embodiments it will be understood by those skilled in the art that various modifications and alterations can be made without departing from the scope of the attached claims. While some of these variations have been discussed above, others will also be apparent. For example, what is important is to structure the cavity, by shape, size and configuration in a way that a radiation field for said cavity is not a mode discrimination mechanism, so back reflection into the cavity does not result in "coherence collapse". The cavity may be index coupled, with a phase shift, gain coupled, loss coupled as desired, provided the radiation field is not a mode discrimination mechanism.

**Claims**

1. An electro-optical interface, said interface comprising a package base (200) connected to a source of electrical signals; a semiconductor telecommunication optical signal source (208) mounted on said base (200) and having a cavity (104) and a second or higher order grating (102) formed within the cavity (104) said telecommunication optical signal source (208) being operatively connected to said package base (200) to convert said electrical signals into surface emission optical signals when said signal source is energised, and a waveguide (216) operatively positioned adjacent to said telecommunication optical signal source (208) to couple said surface emissions to said waveguide (216) **characterized in that** said cavity is sized, shaped and positioned so that a radiation field for said cavity (104) is not a mode discrimination mechanism such that any back reflection received in the cavity (104) affects a coupling coefficient to the radiation field without affecting fundamental modes of oscillation of said cavity (104).

2. An electro-optical interface as claimed in Claim 1, wherein said telecommunication optical signal source (208) is a gain coupled signal source.

3. An electro-optical interface as claimed in Claim 2, wherein said cavity (104) includes said grating (102) in an active layer.

4. An electro-optical interface as claimed in Claim 1, wherein said telecommunication optical signal source (208) is a loss coupled optical signal source.

5. An electro-optical interface as claimed in Claim 4, wherein said cavity (104) includes said grating (102) in a current blocking layer.

6. An electro-optical interface as claimed in Claim 1, wherein said cavity (104) includes an index coupled grating having a phase shift sufficient to isolate back reflection from said cavity oscillations.

7. An electro-optical interface as claimed in Claim 1, wherein said cavity (104) is sized and shaped to guide two counter waves to oscillate in a direction other than along an axis of coupling to said waveguide (216).

8. An electro-optical interface as claimed in Claim 1, wherein said cavity (104) is sized and shaped to guide two counter running waves to oscillate in a direction generally at right angles to the axis of coupling to the waveguide (216).

9. An electro-optical interface as claimed in Claim 6, wherein said isolation makes the surface emission optical signals insensitive to the back reflection.

10. An electro-optical interface as claimed in Claim 9, wherein said insensitivity is achieved without an optical isolator.

11. An electro-optical interface as claimed in any one of the preceding Claims further including one or more lenses (219, 220) located between said signal source (208) and said waveguide (216) to facilitate optical coupling therebetween.

**Patentansprüche**

1. Elektrooptischer Koppler, wobei genannter Koppler eine Gehäusebasis (200), die mit einer Quelle elektrischer Signale verbunden ist, eine Halbleiter-Telekommunikationslichtsignalquelle (208), die auf genannter Basis (200) montiert ist und einen Resonator (104) und ein in dem Resonator (104) ausgebildetes Gitter (102) zweiter oder höherer Ordnung aufweist, wobei genannte Telekommunikationslichtsignalquelle (208) mit genannter Gehäusebasis (200) in Wirkverbindung steht, um genannte elektrische Signale in Oberflächenemissionslichtsignale umzuwandeln, wenn genannte Signalquelle betrieben wird, und einen Wellenleiter (216) umfaßt, der benachbart zu genannter Telekommunikationslichtsignalquelle (208) in Wirkverbindung positioniert ist, um genannte Oberflächenemissionen an genarmten Wellenleiter anzukoppeln, **dadurch gekennzeichnet, daß** genannter Resonator dimensioniert, ausgestaltet und positioniert ist derart, daß ein Strahlungsfeld für genannten Resonator (104) keine Modenauswahleinrichtung ist, so daß irgendeine in dem Resonator (104) empfangene Rückreflexion einen Kopplungskoeffizienten für das Strahlungsfeld beeinflußt, ohne Grundschwingungsmoden von genanntem Resonator (104) zu beeinflussen.

2. Elektrooptischer Koppler nach Anspruch 1, **dadurch gekennzeichnet, daß** genannte Telekommunikationslichtsignalquelle (208) eine gewinngekoppelte Signalquelle ist.

3. Elektrooptischer Koppler nach Anspruch 2, **dadurch gekennzeichnet, daß** genannter Resonator (104) genanntes Gitter (102) in einer aktiven Schicht enthält.

4. Elektrooptischer Koppler nach Anspruch 1, **dadurch gekennzeichnet, daß** genannte Telekommunikationslichtsignalquelle (208) eine verlustgekoppelte Lichtsignalquelle ist.

5. Elektrooptischer Koppler nach Anspruch 4, **dadurch gekennzeichnet, daß** genannter Resonator (104) genanntes Gitter (102) in einer Stromsperrschicht enthält.

6. Elektrooptischer Koppler nach Anspruch 1, **dadurch gekennzeichnet, daß** genannter Resonator (104) ein indexgekoppeltes Gitter mit einer Phasenverschiebung enthält, die zur Isolierung von Rückreflexion von genannten Resonatorschwingungen ausreicht.

7. Elektrooptischer Koppler nach Anspruch 1, **dadurch gekennzeichnet, daß** genannter Resonator (104) so dimensioniert und ausgestaltet ist, daß er zwei Gegenwellen zum Schwingen in einer Richtung führt, die sich von derjenigen entlang einer Achse der Ankopplung an genannten Wellenleiter (216) unterscheidet.

8. Elektrooptischer Koppler nach Anspruch 1, **dadurch gekennzeichnet, daß** genannter Resonator (104) so dimensioniert und ausgestaltet ist, daß er zwei gegenläufige Wellen zum Schwingen in einer Richtung führt, die allgemein rechtwinklig zur Achse der Ankopplung an den Wellenleiter (216) verläuft.

9. Elektrooptischer Koppler nach Anspruch 6, **dadurch gekennzeichnet, daß** genannte Isolierung die Oberflächenemissionslichtsignale gegen die Rückreflexion unempfindlich macht.

10. Elektroaptischer Koppler nach Anspruch 9, **dadurch gekennzeichnet, daß** genannte Unempfindlichkeit ohne einen optischen Isolator erzielt wird.

11. Elektrooptischer Koppler nach einem der vorangehenden Ansprüche, **dadurch gekennzeichnet, daß** er femer eine oder mehrere Linse(n) (219, 220) enthält, die zwischen genannter Signalquelle (208) und genanntem Wellenleiter (216) angeordnet ist, um optische Ankopplung dazwischen zu erleichtem.

**Revendications**

1. Interface électro-optique, ladite interface comprenant une base de boîtier (200) connectée à une source de signaux électriques ; une source de signal optique de télécommunication à semi-conducteur (208) montée sur ladite base (200) et ayant une cavité (104) et un réseau d'ordre secondaire ou supérieur (102) formé dans la cavité (104), ladite source de signal optique de télécommunication (208) étant connectée de façon fonctionnelle à ladite base de boîtier (200) pour convertir lesdits signaux électriques en signaux optiques d'émission de surface quand ladite source de signal est excitée, et un guide d'onde (216) positionné de façon fonctionnelle adjacent à ladite source de signal optique de télécommunication (208) pour coupler lesdites émissions de surface audit guide d'onde (216), **caractérisée en ce que** ladite cavité est dimensionnée, formée et positionnée de sorte qu'un champ de rayonnement pour ladite cavité (104) n'est pas un mécanisme de discrimination de mode de façon telle que toute réflexion arrière reçue dans la cavité (104) affecte un coefficient de couplage au champ de rayonnement sans affecter les modes fondamentaux d'oscillation de ladite cavité (104).

2. Interface électro-optique selon la revendication 1, dans laquelle ladite source de signal optique de télécommunication (208) est une source de signal couplée en gain.

3. Interface électro-optique selon la revendication 2, dans laquelle ladite cavité (104) inclut ledit réseau (102) dans une couche active.

4. Interface électro-optique selon la revendication 1, dans laquelle ladite source de signal optique de télécommunication (208) est une source de signal optique couplée en perte.

5. Interface électro-optique selon la revendication 4, dans laquelle ladite cavité (104) inclut ledit réseau (102) dans une couche de blocage de courant.

6. Interface électro-optique selon la revendication 1, dans laquelle ladite cavité (104) inclut un réseau couplé en index possédant un décalage de phase suffisant pour isoler la réflexion arrière provenant desdites oscillations de cavité.

7. Interface électro-optique selon la revendication 1, dans laquelle ladite cavité (104) est dimensionnée et formée pour guider deux ondes à contre-courant pour osciller dans une direction autre que le long d'un axe de couplage audit guide d'onde (216).

8. Interface électro-optique selon la revendication 1, dans laquelle ladite cavité (104) est dimensionnée et formée pour guider deux ondes à contre-courant pour osciller dans une direction en général à angles droits par rapport à l'axe de couplage au guide d'onde (216).

9. Interface électro-optique selon la revendication 6, dans laquelle ladite isolation rend les signaux optiques d'émission de surface insensibles à la réflexion arrière.

10. Interface électro-optique selon la revendication 9, dans laquelle ladite insensibilité est obtenue sans un isolateur optique.

11. Interface électro-optique selon l'une quelconque des revendications précédentes, incluant de plus une ou plusieurs lentilles (219, 220) situées entre ladite source de signal (208) et ledit guide d'onde (216) pour faciliter un couplage optique entre eux.

Prior Art

Figure 1

Prior Art

Figure 2

**Figure 3**

**Figure 4**

**Figure 5**

**Figure 6**

**Figure 7**

**Figure 8**

**Figure 9**

**Figure 10**

**Figure 11**

EP 1 518 305 B1